# EUROPEAN PATENT APPLICATION

(11) **EP 1 624 695 A1**
(43) Date of publication of application: **08.02.2006**
(21) Application number: 05254906.0
(22) Date of filing: 05.08.2005
(51) Int. Cl.: H04N 7/24, H04N 7/18

(54) **Controlling the distribution of a video stream at different frame rates to various recipients**

(30) Priority: 05.08.2004 US 913252
(71) Applicant: Vicon Industries Inc., Hauppauge NY 11788 (US)
(72) Inventor: Abiri, Yigal, Bizaron (IL)
(74) Representative: Frost, Alex John

(57) **Abstract**

This invention discloses a system for distribution of real time video signals including at least one video camera generating at least one video signal at a supply frame rate, and at least two video signal recipients receiving the at least one video signal at least two respective recipient frame rates selected by an operator, the at least two recipient frame rates differing from each other and not exceeding the supply frame rate.

## Description

### FIELD OF THE INVENTION

The present invention relates to video signal transmission generally and more particularly to real-time distribution of video signals.

### BACKGROUND OF THE INVENTION

Various methodologies for distribution of video signals are known in the patent literature. The following U.S. Patents are believed to represent the current state of the art: 6,757,008, 6,732,183., 6,728,775 and 6,711,622.

Applicant/assignee has manufactured and sold a system for distribution of video signals under the tradename VICONNET Version 2. This system enables a number of different recipients to receive video feeds at rates automatically determined by the available bandwidth associated with said recipient.

### SUMMARY OF THE INVENTION

The present invention seeks to provide an improved video signal distribution system and methodology.

There is thus provided in accordance with a preferred embodiment of the present invention a system for distribution of real time video signals including at least one video camera generating at least one video signal at a supply frame rate and at least two video signal recipients receiving the at least one video signal at at least two respective recipient frame rates selected by an operator, the at least two recipient frame rates differing from each other and not exceeding the supply frame rate.

In accordance with a preferred embodiment of the present invention the system for distribution of real time video signals also includes at least one video signal distributor receiving the at least one video signal from the at least one video camera at the predetermined frame rate and being operative in response to inputs from the operator for selecting the at least two respective recipient frame rates.

In accordance with another preferred embodiment of the present invention the at least one video signal distributor is embedded in the at least one video camera.

In accordance with still another preferred embodiment of the present invention the at least two video signal recipients include video recorders operating at differing frame rates. Preferably, the at least two video signal recipients are interconnected with the at least one video signal distributor via a computer network.

### BRIEF DESCRIPTION OF THE DRAWINGS

The present invention will be understood and appreciated more fully from the following detailed description, taken in conjunction with the drawing in which:

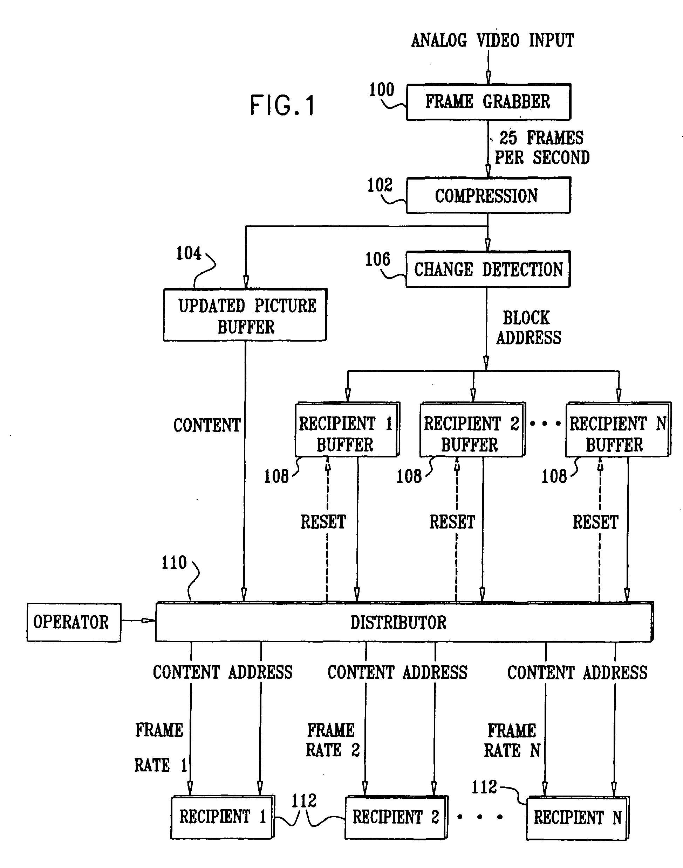

Fig. 1 is a simplified block diagram illustrating the structure and operation of a system for distribution of real time video signals constructed and operative in accordance with a preferred embodiment of the present invention.

### DETAILED DESCRIPTION OF A PREFERRED EMBODIMENT

Reference is now made to Fig. 1, which is a simplified block diagram illustrating the structure and operation of a system for distribution of real time video signals constructed and operative in accordance with a preferred embodiment of the present invention.

As seen in Fig. 1, an analog video input, such as, for example, the output of a surveillance camera, typically have a frame rate of 25 - 30 frames per second, is supplied to a conventional frame grabber 100 which outputs a video stream preferably having a selectable frame rate, typically 25 frames per second. The video stream output from frame grabber 100 is preferably compressed, as by conventional JPEG compression functionality 102 such as that employed in the prior art VICONNET Version 2 system, producing a compressed video stream.

The compressed video stream is supplied to a conventional updated picture buffer 104 and is also preferably supplied to conventional change detection functionality 106, such as that employed in the prior art VICONNET Version 2 system, which is operative to indicate changes between sequential frames on a block-wise basis, wherein each block comprises a plurality of pixels. The output of change detection functionality 106 is an address output which identifies the blocks in which changes occur from frame to successive frame.

The address output of change detection 106 is supplied to a plurality of conventional recipient buffers 108, each of which accumulates the addresses of changed blocks, until it is reset.

A distributor 110 receives operator inputs, selecting a frame rate for each of a plurality of recipients 112. The recipients are typically embodied in computers and computer peripherals and may be various functionalities, such as a pre-alarm functionality, a post-alarm functionality, a recording functionality and a display functionality.

The operator inputs may be preset and/or changed during operation of the system. On the basis of the operator inputs, the distributor 110 is operative for each recipient 112, at times governed by the operator's selection of the frame rate for that recipient, to supply to the recipient the accumulated address output from a corresponding recipient buffer 108 and a corresponding updated picture from updated picture buffer 104. The distributor 110 is also operative to reset the recipient buffers 108 upon receipt of the outputs thereof.

It is appreciated that two or more of the elements of the system described hereinabove may be interconnected via conventional computer networks. It is also appreciated that one or more of the elements of the system described hereinabove may be embedded in a video camera.

It will be appreciated by persons skilled in the art that the present invention is not limited to what has been particularly shown and described hereinabove. Rather the scope of the present invention includes both combinations and subcombinations of the various features described hereinabove as well as modifications and variations thereof as would occur to a person of skill in the art upon reading the foregoing specification and which are not in the prior art.

## Claims

1. A system for distribution of real time video signals comprising:
at least one video camera generating at least one video signal at a supply frame rate; and
at least two video signal recipients receiving said at least one video signal at at least two respective recipient frame rates selected by an operator, said at least two recipient frame rates differing from each other and not exceeding said supply frame rate.

2. A system for distribution of real time video signals according to claim 1 and also comprising at least one video signal distributor receiving said at least one video signal from said at least one video camera at said predetermined frame rate and being operative in response to inputs from said operator for selecting said at least two respective recipient frame rates.

3. A system according to claim 2 and wherein said at least one video signal distributor is embedded in said at least one video camera.

4. A system according to claim 1 and wherein said at least two video signal recipients comprise video recorders operating at differing frame rates.

5. A system according to claim 2 and wherein said at least two video signal recipients are interconnected with said at least one video signal distributor via a computer network.

6. A system according to claim 2 and wherein said at least two video signal recipients comprise video recorders operating at differing frame rates.

7. A system according to claim 3 and wherein said at least two video signal recipients are interconnected with said at least one video signal distributor via a computer network.

8. A system according to claim 3 and wherein said at least two video signal recipients comprise video recorders operating at differing frame rates.

9. A system according to claim 4 and wherein said at least two video signal recipients are interconnected with said at least one video signal distributor via a computer network.
